# EUROPEAN PATENT APPLICATION

(11) **EP 1 977 846 A2**
(43) Date of publication of application: **08.10.2008**
(21) Application number: 08006144.3
(22) Date of filing: 28.03.2008
(51) Int. Cl.: B23D 21/00, B23D 25/02

(54) **Flying cutting apparatus for welded pipes**

(30) Priority: 04.04.2007 IT MI20070694
(71) Applicant: Olimpia 80 SRL, 27020 Borgo San Siro (PV) (IT)
(72) Inventor: Travini, Livio, 27020 Borgo San Siro (Pavia) (IT)
(74) Representative: Petruzziello, Aldo

(57) **Abstract**

An apparatus (1) for cutting pipes is disclosed, to be included in a system for the continuous production of welded pipes and comprising at least one supporting structure (15), carried by a carriage (3), which carries a hydraulic cylinder (7), a slide (5) driven by the hydraulic cylinder (7), a vice (14), pre-cutting means (9, 12, 13) and cutting means (11).

During its stroke, the slide (5):
- blocks the pipe to be cut, causing the jaws of the vice (14) to close;
- operates the pre-cutting means (9, 12, 13), which score the surface of the pipe to be cut, blocked by the vice (14);
- operates the cutting means (11) to cut the pipe blocked by the vice (14).

The carriage (3) advantageously slides on flat linear guides (2) carried by a bench (4) at different heights with respect to the floor.

## Description

The present invention refers to a flying cutting apparatus to be included in a system for producing welded pipes to divide the continuous pipe produced by said production system into portions of a preset length.

Cutting apparatuses to be included in a system for producing welded pipes, carried on a carriage movable on a plurality of guides and comprising means to block the pipe, cutting means adapted to cut the blocked pipe and, possibly, pre-cutting means which score the surface of the blocked pipe to ease the task of the cutting means, are known to the art.

Pre-cutting means consisting of a blade situated at the end of a curved arm carried by a pivot connected to the cutting means by means of a rack and of a gear chain (a translation of the cutting means causing a rotation of the curved arm) or of a blade carried by a body made to rotate by a crank are known to the art. The cutting means and, if present, the pre-cutting means are generally operated by a press, by one or more eccentric cams, by camshafts or crankshafts and/or by other functionally equivalent mechanical means.

The cutting apparatuses of the prior art have numerous limitations and/or drawbacks, amongst which there is the fact that the mechanical means that drive the cutting means and, if present, the pre-cutting means are cumbersome, costly and (often) noisy and require a (relatively) frequent maintenance.

Furthermore, the carriage generally slides on prismatic guides carried by an inclined surface; consequently, the weight of the cutting apparatus is not spread evenly over the two sides of the guides, which wear asymmetrically undermining (or potentially undermining) the precision of the cutting operation and making necessary a (relatively) frequent maintenance and/or replacement of said guides.

Object of the present invention is to overcome the above limitations and/or drawbacks presented by the systems of the prior art for producing cut pipes; this object is achieved by means of a cutting apparatus that has the characterising features illustrated in claim 1.

Further advantageous characteristics of the invention form the subject matter of the dependent claims.

Further characteristics of the invention will be made clearer by the detailed description that follows, referring to a purely exemplifying and therefore non-limiting embodiment thereof illustrated in the appended drawings, wherein:
- Figure 1 shows diagrammatically an overall view of a cutting apparatus made according to the invention, carried by a carriage movable on a bench;
- Figure 2 shows diagrammatically a side view of the cutting apparatus of Figure 1;
- Figure 3 shows diagrammatically a front view of the cutting apparatus of Figure 2;
- Figure 4 shows diagrammatically a front view and a top view of the vice adapted to block the pipe to be cut;
- Figure 5 shows diagrammatically a top view of the carriage and of the supporting structure of Figure 1, with the hollow fulcra that constrain the supporting structure to the carriage sectioned.

In the appended figures like parts will be identified by like reference numerals.

The present invention refers to a cutting apparatus for welded pipes, comprising a supporting structure (carried on a carriage movable, by means of guides, on a bench), which carries a vice, pre-cutting means, cutting means and a hydraulic cylinder which moves a slide to operate the vice, the pre-cutting means and the cutting means.

The carriage advantageously slides on the bench by means of flat linear guides placed at different heights with respect to the floor.

During its stroke, the slide blocks the pipe to be cut causing the jaws of the vice to close, operates the pre-cutting means to score the surface of the pipe blocked by the vice and operates a blade forming the cutting means to cut the pipe.

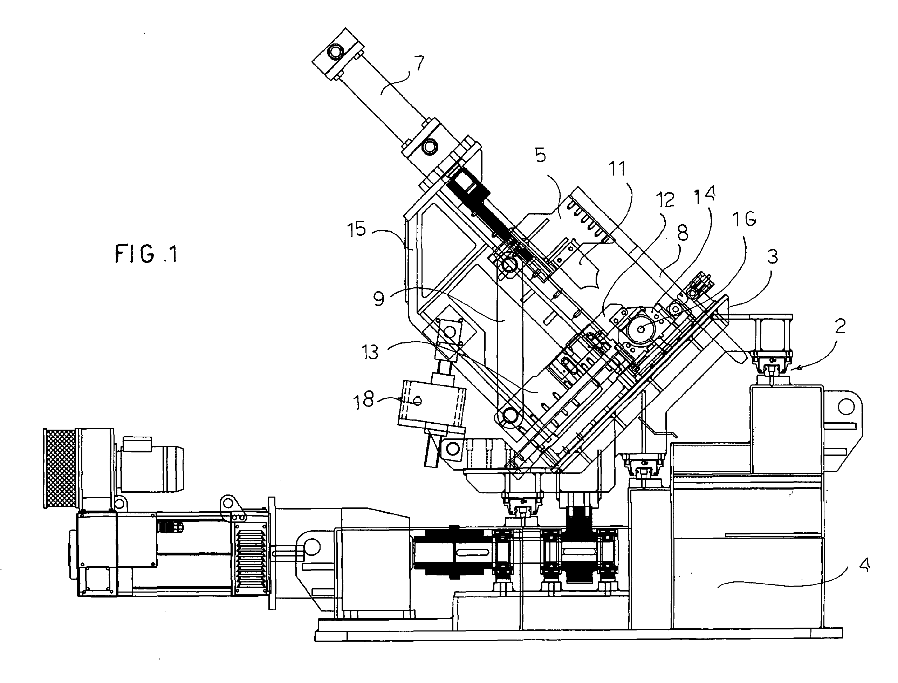

Figure 1 shows diagrammatically an overall view of a cutting apparatus 1 made according to the invention; from Figure 1 it can be seen that the cutting apparatus 1 comprises at least one supporting structure 15 which carries a hydraulic cylinder 7 that operates a vice 14, pre-cutting means (9, 12, 13) and cutting means consisting, in the embodiment described herein, of the blade 11.

The hydraulic cylinder 7 preferably moves a slide 5 which operates the pre-cutting means (9, 12, 13), the cutting means 11 and, by means of the rod 8, the vice 14.

The cutting apparatus 1 and its parts (the vice, the pre-cutting and cutting means, etc.) will be described with reference to the subsequent figures.

The cutting apparatus 1 is carried by a carriage 3, which, in the embodiment described herein, slides on a bench 4 by means of the flat linear guides 2 placed at different heights with respect to the floor.

The carriage 3 and the supporting structure 15 further carry means adapted to move the carriage 3 on the flat linear guides 2: said drive means will not be explicitly described because they are per se known and in any case outside the scope of the present invention.

Similarly to what occurs in the cutting systems of the prior art, the carriage 3 is inclined by about 45° with respect to the horizontal: the replacement of prismatic guides carried by an inclined surface (generally used in the cutting systems of the prior art) with the flat linear guides 2 carried by the bench 4 at different heights with respect to the floor proves advantageous since it allows the weight of the cutting apparatus 1 to be distributed evenly on the guides 2, thus avoiding the previously described drawbacks presented by the cutting apparatus of the prior art.

The cutting apparatus 1 shown in the appended figures is adapted to cut a round pipe, but, without departing from the scope of the invention, it can be used to cut a square or a rectangular pipe by equipping the vice 14 with jaws of a suitable shape (not described because they are per se known) and by giving the pre-cutting means (9, 12, 13) and the blade 11 the appropriate inclination with respect to the pipe.

It is in fact known to a person skilled in the art that it is advisable to pre-cut and cut a round welded pipe in an area away from the welding seam and to precut and cut a square or a rectangular welded pipe at one of its corners, keeping the axis of symmetry of the blade 11 substantially aligned with the diagonal of the pipe.

For this purpose, the pre-cutting means (9, 12, 13) and the blade 11 are normally inclined by about 45° with respect to the welding seam to cut a round pipe, by about 45° with respect to a corner to cut a square pipe and by about 59° with respect to a corner to cut a rectangular pipe.

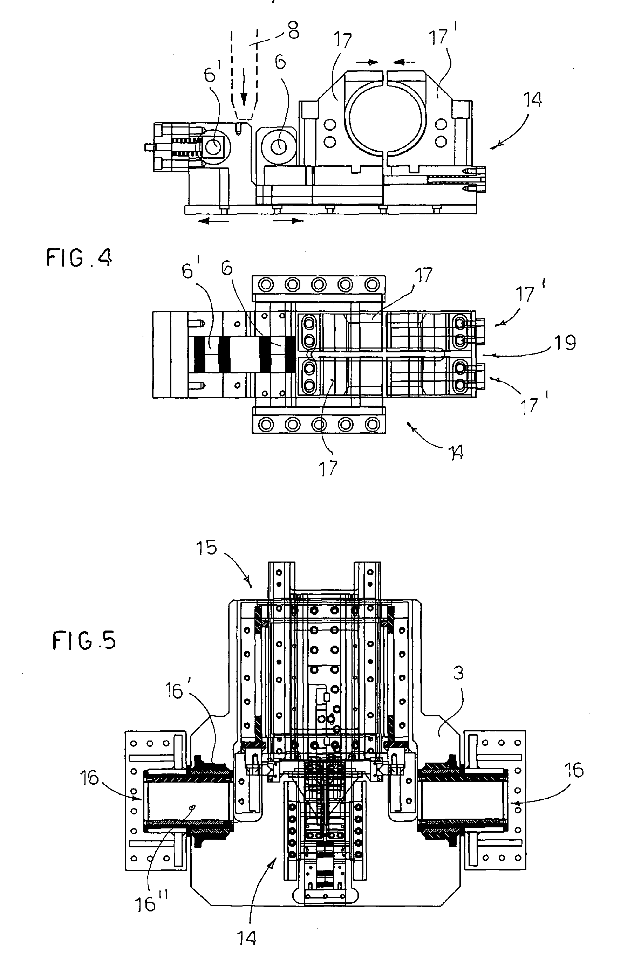

To set up the cutting apparatus 1 for cutting a rectangular pipe, the supporting structure 15 is connected to the carriage 3 by means of a pair of hollow rotation fulcra 16 (Figure 5) and can be made to rotate with respect to the carriage 3 by means of a jack 18 (or of other functionally equivalent moving means) placed between the carriage 3 and the supporting structure 15.

The pipe to be cut (omitted in the appended drawings for the sake of simplicity of the graphic representation) is inserted into the hollow fulcra 16 and into the vice 14, which is situated between the hollow fulcra 16 (Figure 5).

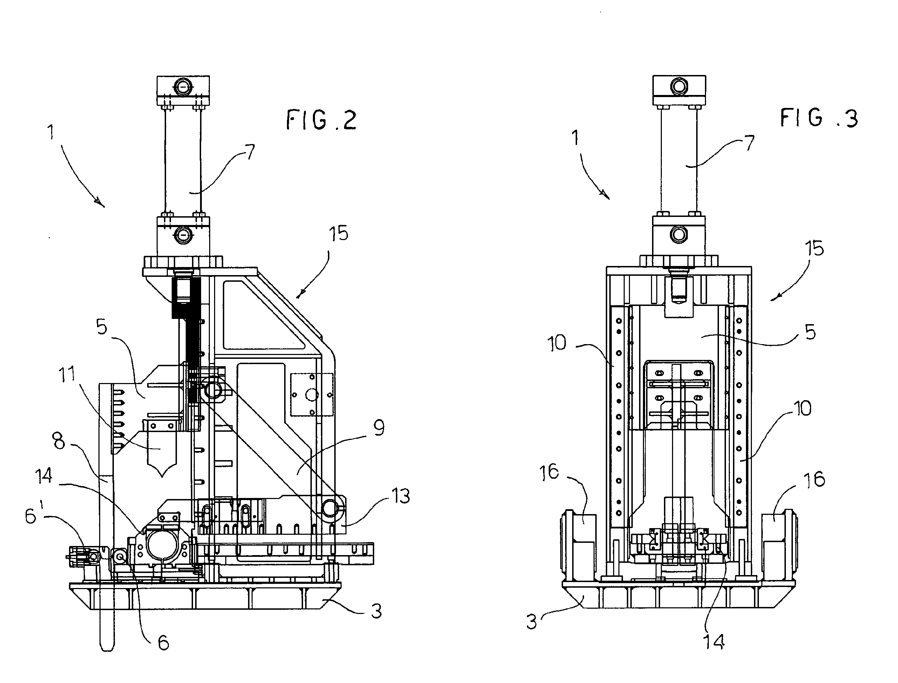

Figure 2 shows diagrammatically a side view of the cutting apparatus 1. In Figure 2 the carriage 3 which carries the supporting structure 15, the slide 5 driven by the hydraulic cylinder 7 and sliding on the vertical guides 10 (Figure 3), the rod 8 integral with the slide 5, the pre-cutting means (9, 12, 13) operated by the slide 5, the blade 11 carried by the slide 5 and the vice 14 operated by the rod 8 can be seen.

When the slide 5 descends by sliding on the vertical guides 10, the rod 8 is inserted between the rollers (6, 6') belonging to the vice 14, clamping it on the pipe to be cut and, at the same time, the lever 9 (belonging to the pre-cutting means) causes the slide 13 carrying the pre-cutting blade to slide on horizontal guides, not indicated in the appended figures for the sake of simplicity of the graphic representation.

In the embodiment described here, the pre-cutting blade consists of a curved part 12 that scores the top part of the pipe to be cut.

Once the pre-cutting has been performed, the further descent of the slide 5 brings the blade 11 to cut the pipe clamped in the vice 14.

A preferred embodiment of the vice 14 will be described with reference to Figure 4.

Figure 3 shows diagrammatically a front view of the cutting apparatus 1 of Figure 2; the carriage 3 which carries the supporting structure 15, the slide 5 driven by the hydraulic cylinder 7 and slidable on the vertical guides 10, the hydraulic cylinder 7, the rod 8 integral with the slide 5, the guides 10, the vice 14 operated by the rod 8 and the hollow rotation fulcra 16 are visible in Figure 3.

Figure 4 shows diagrammatically a front view and a top view of the vice 14 adapted to block the pipe to be cut, which comprises a first movable jaw 17 integral with a first movable roller 6, a second movable jaw 17' integral with a second movable roller 6' and springs (or other functionally equivalent means) adapted to recall the movable jaws 17 and 17' to the resting position.

The movable jaws 17 and 17' advantageously slide on horizontal guides, not explicitly recalled in Figure 4 for sake of simplicity of the graphic representation.

When the hydraulic cylinder 7 causes the slide 5 to descend, the rod 8 is inserted between the rollers (6, 6') of the vice 14, moving them apart and causing the movable jaws 17 and 17' to slide one against the other, clamping the pipe to be cut.

The jaws (17, 17') of the vice 14 are thus self-centring.

Once the pipe cutting cycle has ended, the hydraulic cylinder 7 lifts the slide 5 disengaging the rod 8 from the rollers (6, 6') and the recall means bring the movable jaws 17 and 17' back to the resting position, opening the vice 14.

The movement of the rod 8 when it is inserted between the rollers (6. 6') and the consequent movements of the rollers 6 and 6' and of the jaws 17 and 17' have been indicated by arrows in Figure 4.

From the top view it can be seen that the jaws (17, 17') of the vice 14 comprise two parts between which there is a seat 19 into which the cutting blade 11 is inserted.

Figure 5 shows diagrammatically a top view of the carriage 3 and of the supporting structure 15 of Figure 1, in which the hollow fulcra 16 which constrain the supporting structure 15 to the carriage 3 have been sectioned.

Each of the hollow rotation fulcra 16 comprises a pair of tubular bodies (16', 16"), coaxial with each other and free to rotate with respect to one another: one of said tubular bodies (16') is integral with the carriage 3, whilst the other (16") is integral with the supporting structure 15.

Without departing from the scope of the invention, a person skilled in the art can make to the cutting apparatus previously described all the modifications and improvements suggested by normal experience and/or by the natural evolution of the art.

## Claims

1. A flying cutting apparatus (1) for welded pipes, comprising a supporting structure (15) which carries a vice (14), pre-cutting means (9, 12, 13) and cutting means (11), the supporting structure (15) being carried by a carriage (3) movable, by means of guides (2), on a bench (4), **characterised in that** the supporting structure (15) further carries a hydraulic cylinder (7) adapted to operate the vice (14), the pre-cutting means (9, 12, 13) and the cutting means (11).

2. A cutting apparatus (1) as in claim 1, **characterised in that** the hydraulic cylinder (7) moves a slide (5), slidable on vertical guides (10), which:
- blocks the pipe to be cut by clamping the jaws of the vice (14) on said pipe;
- operates the pre-cutting means (9, 12, 13) adapted to score the surface of the pipe to be cut, blocked by the vice (14);
- carries a blade forming the cutting means (11) for the cutting of the pipe blocked by the vice (14).

3. A cutting apparatus (1) as in claim 2, **characterised in that** the vice (14) comprises a first movable jaw (17), a first movable roller (6) integral with the first movable jaw (17), a second movable jaw (17'), a second movable roller (6') integral with a second movable jaw (17') and means adapted to recall the movable jaws (17, 17') to a the resting position; the movable jaws (17, 17') being adapted to slide on horizontal guides and being clamped on the pipe to be cut by a rod (8) integral with the slide (5) which, inserted between the movable rollers (6, 6') belonging to the vice (14), moves them away causing the movable jaws 17 and 17' to slide against one another; the recall means returning the movable jaws (17, 17') to the resting position, opening the vice (14), when the rod (8) is disengaged from the rollers (6, 6').

4. A cutting apparatus (1) as in claim 2, **characterised in that** the slide (5) operates a lever (9) belonging to the pre-cutting means, causing a slide (13) carrying a pre-cutting blade to slide on horizontal guides.

5. A cutting apparatus (1) as in claim 4, **characterised in that** the pre-cutting blade consists of a curved part (12) adapted to score the top part of the pipe to be cut.

6. A cutting apparatus (1) as in claim 1, **characterised in that** the supporting structure (15) is connected to the carriage (3) by means of a pair of hollow fulcra of rotation (16) and is made to rotate with respect to the carriage (3) by moving means (18) situated between the carriage (3) and the supporting structure (15), the pipe to be cut being inserted in the hollow fulcra (16) and in the vice (14), which is situated between the hollow fulcra (16).

7. A cutting apparatus (1) as in claim 6, **characterised in that** each of the hollow rotation fulcra (16) comprises a pair of tubular bodies (16', 16"), coaxial to each other and free to rotate with respect to one another, one of said tubular bodies (16') being integral with the carriage (3) and the other (16") being integral with the supporting structure (15).

8. A cutting apparatus (1) as in at least one of the preceding claims, **characterised in that** the carriage (3) slides on the bench (4) by means of flat linear guides (2) carried by the bench (4) at different heights with respect to the floor.
